# EUROPEAN PATENT APPLICATION

(11) **EP 2 846 315 A1**
(43) Date of publication of application: **11.03.2015**
(21) Application number: 13198213.4
(22) Date of filing: 18.12.2013
(51) Int. Cl.: G07F 17/00

(54) **Bicycle rental system and method**

(30) Priority: 09.09.2013 KR 20130107666; 13.12.2013 KR 20130154027
(71) Applicant: Mando Corporation, Pyeongtaek-si, Gyeonggi-do (KR)
(72) Inventor: Song, Joon Kyu, Gyeonggi-do (KR)
(74) Representative: Hirsch & Associés

(57) **Abstract**

Disclosed herein are a bicycle rental system and method. The bicycle rental system includes a public bicycle (10), a bicycle holder (20), a bicycle management server which transmits rental approval information and return confirmation information to the outside, and a user terminal which is provided to be capable of performing wireless communicate with the public bicycle (10), is linked to the bicycle management server via a network, is provided with identification information of the public bicycle (10), creates rental approval request information during rental of the public bicycle (10) to transmit the rental approval request information to the bicycle management server, creates return request information during return of the public bicycle (10) to transmit the return request information to the bicycle management server, and receives the rental approval information and the return confirmation information transmitted from the bicycle management server in response to the rental approval request information and the return request information. The user terminal (30) comprises a camera module (33) which captures the two-dimensional bar code or qr code provided to be capable of being exposed to the public bicycle (10), and the user terminal (30) scans the two-dimensional bar code using the camera module (33) and is automatically linked to the public bicycle (10) by wireless communication therebetween through the wireless communication module (13) based on the scanned result. The bicycle and the mobile phone are paired.

## Description

### BACKGROUND

### 1. Field

Embodiments of the present invention relate to a bicycle rental system enabling rental or return of a bicycle using a user terminal, and a bicycle rental method using the same.

### 2. Description of the Related Art

A bicycle service, particularly a public bicycle service is provided for the purpose of solving problems such as traffic congestion, air pollution, and high oil prices, creating a healthy society, and improving people's quality of life, and is mainly managed by an automatic rental system.

A bicycle storage place as a space in a station form in which public bicycles are automatically rented and returned is referred to as a station. The stations are intensively installed in places where are close to surrounding facilities and convenient for use by people. Users of public bicycles may rent and return the bicycles anywhere the stations are installed regardless of places.

A bicycle rental system generally includes a public bicycle, a bicycle holder, and a kiosk which are arranged in a bicycle station.

The public bicycle is a bicycle which may be conveniently used by any of the elderly and infirm and the women. The bicycle holder is a space in which the bicycle is directly rented and returned, and includes a bicycle locking device which may bind the bicycle to the bicycle holder during storage of the bicycle and a wireless communication device for wireless communication with a user terminal. A user may decouple the bicycle from the bicycle holder and use the decoupled bicycle by communicating with the bicycle holder using the user terminal such as a mobile phone. The kiosk may identify whether or not the bicycle is rented and various types of information such as position information of a surrounding station and weather information through an LCD screen.

In an existing bicycle rental system, when a user executes an app as a program for rental of public bicycles installed in the user terminal and inputs a bicycle identification number of a bicycle to be rented, the bicycle rental system receives position information of a bicycle holder through communication with the bicycle holder and transmits the bicycle identification number and the position information so as to request rental approval of the bicycle. When the user terminal receives rental approval information transmitted from a bicycle management server in response to the request for rental approval, the rental approval information is transmitted to the bicycle holder. Consequently, the bicycle locking device is unlocked from the bicycle holder so that a user may use the public cycle.

However, the existing bicycle rental system has cumbersomeness since a user inputs the bicycle identification number of the bicycle.

In addition, the bicycle holder of the existing bicycle rental system includes the bicycle locking device and the wireless communication device. Therefore, the size and installation space of the bicycle holder are increased. Furthermore, significant costs are required to install the bicycle rental system in the bicycle rental place.

### SUMMARY

Therefore, it is an aspect of the present invention to provide a bicycle rental system which is provided with a bicycle including a bicycle locking device and a wireless communication device so as to easily enable rental and return of the bicycle by a user and of reducing of system costs, and is performed such that the bicycle linked to a user terminal by communication therebetween may be automatically rented and returned using the user terminal, and a bicycle rental method using the same.

Additional aspects of the invention will be set forth in part in the description which follows and, in part, will be obvious from the description, or may be learned by practice of the invention.

In accordance with one aspect of the present invention, a bicycle rental system includes a public bicycle having a bicycle locking function and a wireless communication function, a bicycle holder having a docking portion which is provided to be capable of being connected to the public bicycle such that the public bicycle is locked, a bicycle management server which manages rental and return of the public bicycle and transmits rental approval information and return confirmation information to the outside, and a user terminal which is provided to be capable of performing wireless communicate with the public bicycle, is linked to the bicycle management server via a network, is provided with identification information of the public bicycle from the public bicycle, creates rental approval request information including the provided identification information during rental of the public bicycle to transmit the rental approval request information to the bicycle management server, creates return request information including the provided identification information during return of the public bicycle to transmit the return request information to the bicycle management server, and receives the rental approval information and the return confirmation information transmitted from the bicycle management server in response to the rental approval request information and the return request information, wherein the public bicycle includes a two-dimensional bar code provided to be capable of being exposed thereto, a bicycle locking device to lock and unlock the public bicycle, a wireless communication module to exchange information with the user terminal through communication, and an ECU which is linked to the user terminal by wireless communication therebetween according to the request of the user terminal, and controls the bicycle locking device such that, when the rental approval information is received from the user terminal linked by the wireless communication, the public bicycle is unlocked, the user terminal includes a camera module which captures the two-dimensional bar code provided to be capable of being exposed to the public bicycle, and the user terminal scans the two-dimensional bar code using the camera module and is automatically linked to the public bicycle by wireless communication therebetween through the wireless communication module based on the scanned result.

The user terminal and the public bicycle may be linked by Bluetooth pairing therebetween based on the scanned result of the two-dimensional bar code.

The public bicycle may include a docking sensing unit to sense connection of the docking portion to the bicycle locking device.

When the connection of the docking portion to the bicycle locking device is sensed by the docking sensing unit, the public bicycle may transmit bicycle connection information indicating that the docking portion is connected to the bicycle locking device to the user terminal which is linked to the public bicycle by wireless communication therebetween.

Each of the rental approval request information and the return request information may include identification information of the public bicycle, position information of the user terminal, and terminal information of the user terminal.

In accordance with another aspect of the present invention, a bicycle rental method includes renting a public bicycle having a bicycle locking device connected with a docking of a bicycle holder such that the bicycle is locked, and a wireless communication module using a user terminal, and returning the rented public bicycle using the user terminal, wherein the renting the public bicycle includes, in the user terminal, activating an app for the rental of the public bicycle installed in the user terminal, scanning a two-dimensional bar code provided to be exposed to the public bicycle using the app to link the public bicycle to the user terminal by wireless communication therebetween, acquiring identification information of the public bicycle by a request to the public bicycle, creating rental approval request information including the acquired identification information of the public bicycle to transmit the rental approval request information to a bicycle management server, receiving rental approval information transmitted from the bicycle management server in response to the rental approval request information, and transmitting the received rental approval information to the public bicycle, and, in the public bicycle, unlocking the bicycle locking device such that, based on the rental approval information transmitted from the user terminal, the docking portion is decoupled from the bicycle locking device and the public bicycle is decoupled from the bicycle holder.

The returning the public bicycle may include, when connection of the docking portion to the bicycle locking device is sensed by a docking sensing unit to sense the connection of the docking portion to the bicycle locking device, transmitting bicycle connection information indicating that the docking portion is connected to the bicycle locking device to the user terminal which is linked to the public bicycle by wireless communication therebetween.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a view schematically illustrating a configuration of a bicycle rental system according to an embodiment of the present invention;
FIG. 2 is a view for explanation of connection of a public bicycle to a bicycle holder in the bicycle rental system according to the embodiment of the present invention;
FIG. 3 is a control block diagram of the public bicycle in the bicycle rental system according to the embodiment of the present invention;
FIG. 4 is a control block diagram of a user terminal in the bicycle rental system according to the embodiment of the present invention;
FIG. 5 is a view for explanation of a screen of a rental app through which the public bicycle is rented in the bicycle rental system according to the embodiment of the present invention;
FIG. 6 is a view for explanation of a screen of a rental app through which the public bicycle is returned in the bicycle rental system according to the embodiment of the present invention;
FIG. 7 is a control flowchart for explanation of a method of renting the public bicycle in the bicycle rental system according to the embodiment of the present invention; and
FIG. 8 is a control flowchart for explanation of a method of returning the public bicycle in the bicycle rental system according to the embodiment of the present invention.

### DETAILED DESCRIPTION

Reference will now be made in detail to the embodiments of the present invention with reference to the accompanying drawings. These embodiments are provided as examples so that the present invention will be thorough and complete, and will fully convey the scope of the invention to those skilled in the art. The present invention may be embodied in many different forms and should not be construed as limited to the embodiments set forth herein. In certain embodiments, unrelated portions may be omitted in the drawings in order to avoid obscuring appreciation of the invention by a person of ordinary skill in the art. In the drawings, the width, the length, the thickness, or the like of each component may be exaggerated, omitted, or schematically illustrated for convenience of description and clarity. Wherever possible, the same reference numbers will be used throughout the drawings to refer to the same or like parts.

In the specification, the term "and/or" means to include at least one of preceding and succeeding components. In addition, the term "connected/coupled" means that one component is directly connected to another component or is indirectly connected through another component. In the specification, the singular forms are intended to include the plural forms as well, unless context clearly indicates otherwise. It will be further understood that the terms "comprises" and/or "comprising," when used in the specification, specify the presence of stated features, integers, steps, operations, elements, and/or components, but do not preclude the presence or addition of one or more other features, integers, steps, operations, elements, components, and/or groups thereof.

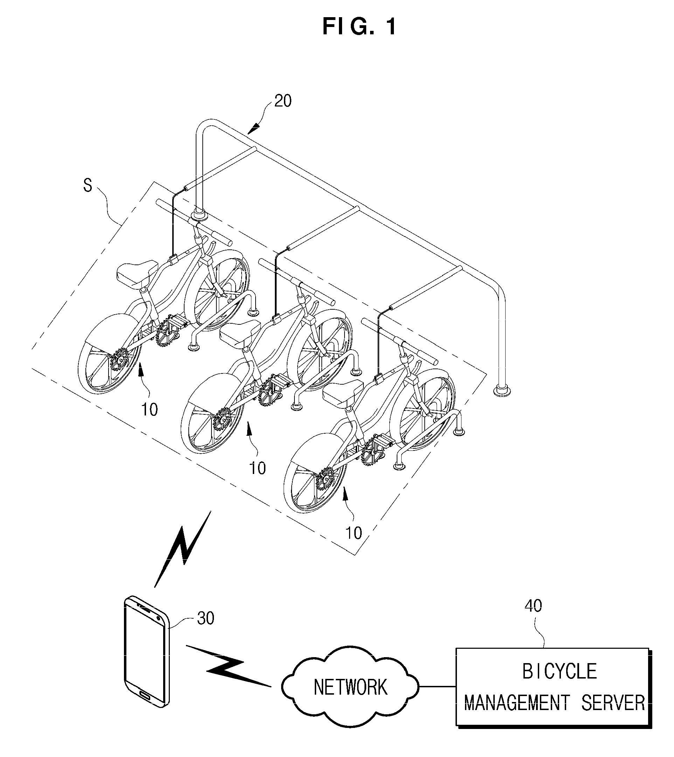

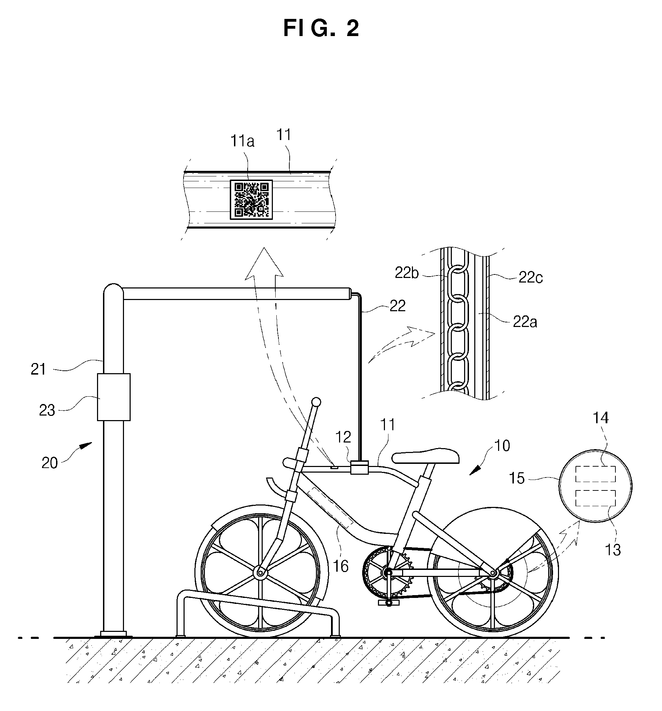

FIG. 1 is a view schematically illustrating a configuration of a bicycle rental system according to an embodiment of the present invention. FIG. 2 is a view for explanation of connection of a public bicycle to a bicycle holder in the bicycle rental system according to the embodiment of the present invention.

Referring to FIGS. 1 and 2, the bicycle rental system may include public bicycles 10, a bicycle holder 20, and a user terminal 30.

In addition, the bicycle rental system may further include a bicycle management server 40 linked to the user terminal 30 via a network, besides the public bicycles 10, the bicycle holder 20, and the user terminal 30.

The public bicycles 10 and the bicycle holder 20 are arranged in a station S. The station S is a bicycle storage place where the bicycle holder 20 to hold the public bicycles 10 for rental is installed, and may be provided in a place such as a park, a railroad station, or a public institution.

Each of the public bicycles 10 is a rental bicycle arranged in the station S such that people rent the bicycle from a management institution such as a local government.

The public bicycle 10 has inherent identification information 11a. The identification information 11a of the public bicycle 10 is printed on a bicycle frame 11 of the public bicycle 10 or is fixedly installed to the public bicycle 10 in the form of a separate number plate such that a user and a manager may easily identify the identification information 11a.

The identification information 11a of the public bicycle 10 may be, for example, bar code information. The bar code information may include a two-dimensional bar code such as PDF417, datamatrix, QR code, or maxicode. Particularly, the identification information 11a of the public bicycle 10 may be identification information made so as to be capable of being used as use for Bluetooth pairing between the public bicycle 10 and the user terminal 30.

The public bicycle 10 may include a bicycle locking device 12, a wireless communication module 13, and an ECU (Electronic Control Unit) 14. In addition, the public bicycle 10 may further include a drive motor 15 and a battery 16, besides the bicycle locking device 12, the wireless communication module 13, and the ECU 14.

The bicycle locking device 12 is provided on the bicycle frame 11. The bicycle locking device 12 may be provided integrally with the bicycle frame 11.

The bicycle locking device 12 maintains the public bicycle 10 in a locked state by being coupled with a docking portion 22 of the bicycle holder 20, and releases the locked state of the public bicycle 10 when the docking portion 22 is decoupled from the bicycle locking device 12.

When the docking portion 22 is inserted into the bicycle locking device 12 by a predetermined length to be coupled thereto, coupling between the bicycle locking device 12 and the docking portion 22 is locked without separation therebetween. When power is applied to a drive portion within the bicycle locking device 12, the bicycle locking device 12 is decoupled from the docking portion 22. In this case, the drive portion may be formed of a solenoid.

When a user connects the docking portion 22 to the bicycle locking device 12, the docking portion 22 is fastened to the bicycle locking device 12 such that the bicycle locking device 12 enters a locked state. When the drive portion operates, the docking portion 22 is decoupled from the bicycle locking device 12 such that the bicycle locking device 12 enters an unlocked state.

The wireless communication module 13 supports wireless communication with the user terminal 30. The wireless communication module 13 may be formed of, for example, any one of Bluetooth, IrDA (Infrared Data Association), UWB (Ultra Wideband), and ZigBee, or a combination thereof.

The ECU 14 allows the bicycle locking device 12 to be unlocked, based on rental approval information transmitted from the user terminal 30. The rental approval information is information provided to the user terminal 30 from the bicycle management server 40 in response to request of the user terminal 30.

Meanwhile, when, in an unlocked state of the bicycle locking device 12, connection of the docking portion 22 of the bicycle holder 20 to the unlocked bicycle locking device 12 is sensed, the ECU 14 is automatically linked to the user terminal 30 by wireless communication therebetween through the wireless communication module 13 and transmits information informing that the bicycle locking device 12 of the associated public bicycle 10 is connected to the docking portion 22 of the bicycle holder 20 to the user terminal 30.

Consequently, the user terminal 30 transmits return information informing that the public bicycle 10 is returned to the bicycle management server 40. Then, the bicycle management server 40 converts the public bicycle 10 from a rental state into a return state so that the return of the public bicycle 10 is completed.

The drive motor 15 rotates a wheel of the public bicycle 10. For example, the drive motor 15 is mounted to a rear wheel of the public bicycle 10 to rotate the rear wheel by being driven in response to a control signal of the ECU 14.

The battery 16 supplies power to a variety of components of the public bicycle.

The bicycle holder 20 is installed to hold the public bicycle 10, and includes a holder body 21 to hold the public bicycle 10, a docking portion 22 extending from the holder body 21 by a predetermined length, and a charging portion 23 which serves to charge the battery 16 of the public bicycle 10.

When the docking portion 22 is coupled to or decoupled from the bicycle locking device 12 of the public bicycle 10, the bicycle locking device 12 enters a locked state or an unlocked state. Thus, the public bicycle 10 is in a state of being decoupled from or coupled to the bicycle holder 20.

The docking portion 22 may simultaneously perform locking and charging of the public bicycle 10. To this end, the docking portion 22 may include an outer shell 22c defining an external appearance thereof, and a locking cable 22b having a chain shape and a charging line 22a which are provided inside the outer shell 22c. The charging line 22a is provided so as to, when the docking portion 22 is coupled to the bicycle locking device 12, be coupled to a charging terminal connected with a charging circuit for charging of the battery 16 in the bicycle locking device 12.

The charging portion 23 charges the battery 16 of the public bicycle 10 using electrical energy supplied through the charging line 22a of the docking portion 22.

Accordingly, by coupling the docking portion 22 to the bicycle locking device 12, the public bicycle 10 may enter a locked state and at the same time the battery 16 may be charged by electrical energy supplied through the charging line.

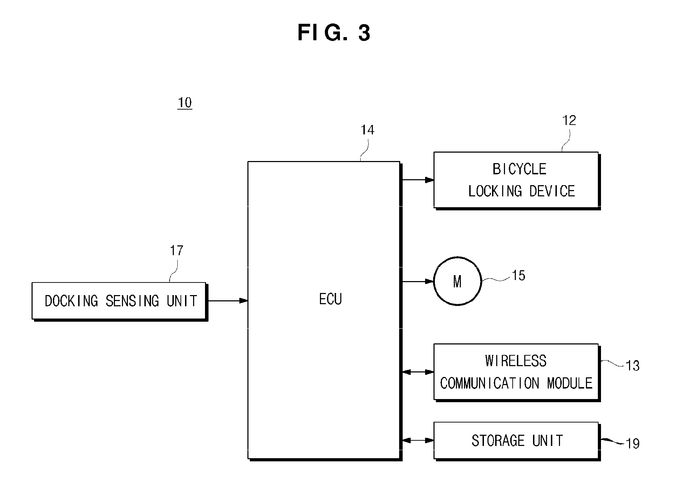

FIG. 3 is a control block diagram of the public bicycle in the bicycle rental system according to the embodiment of the present invention.

Referring to FIG. 3, the public bicycle 10 includes the ECU 14 to perform overall control thereof.

An input side of the ECU 14 is electrically connected with a docking sensing unit 17.

In addition, an output side of the ECU 14 is electrically connected with the bicycle locking device 12 and the drive motor 15.

Moreover, the input and output sides of the ECU 14 are electrically connected with the wireless communication module 13 and a storage unit 19.

The docking sensing unit 17 senses connection of the docking portion 22 of the bicycle holder 20 to the bicycle locking device 12.

The storage unit 19 stores various types of information for wireless linkage with the user terminal 30. In addition, the storage unit 19 stores inherent identification information of the public bicycle.

The ECU 14 receives a request for communication linkage from the user terminal 30 through the wireless communication module 13, and performs communication linkage with the user terminal 30 so as to be capable of exchanging information with each other according to the received linkage request. When the wireless communication module 13 is a Bluetooth module, the ECU 14 performs Bluetooth pairing for communication linkage between the user terminal 30 and the device.

When the ECU 14 receives rental approval information from the user terminal 30 through the wireless communication module 13, the ECU 14 allows the bicycle locking device 12 to be unlocked. The rental approval information is information provided to the user terminal 30 from the bicycle management server 40 in response to the request of the user terminal 30.

Meanwhile, when the docking portion 22 of the bicycle holder 20 is connected to the bicycle locking device 12, the ECU 14 senses the same through the docking sensing unit 17 and is automatically linked to the user terminal 30 by wireless communication therebetween through the wireless communication module 13. Then, the ECU 14 transmits information informing that the bicycle locking device 12 of the associated public bicycle 10 is connected to the docking portion 22 of the bicycle holder 20 to the user terminal 30 through the wireless communication module 13. Accordingly, the user terminal 30 transmits return request information which requests return of the public bicycle 10 to the bicycle management server 40. Consequently, the bicycle management server 40 converts the state of the public bicycle 10 from a rental state into a return state in a database thereof and transmits return confirmation information to the user terminal 30. When the user terminal 30 receives the return confirmation information from the bicycle management server 40, the user terminal 30 informs a user of return completion of the public bicycle 10 so that the return of the public bicycle 10 is completed.

The user terminal 30 includes a terminal capable of wireless communication. For example, the user terminal 30 may be a terminal such as a tablet PC, a notebook, a mobile phone, a PDA, a smart phone, or a tablet terminal capable of wireless communication during movement.

The user terminal 30 may wirelessly communicate with the public bicycle 10. In addition, the user terminal 30 may communicate with the bicycle management server 40 via the network.

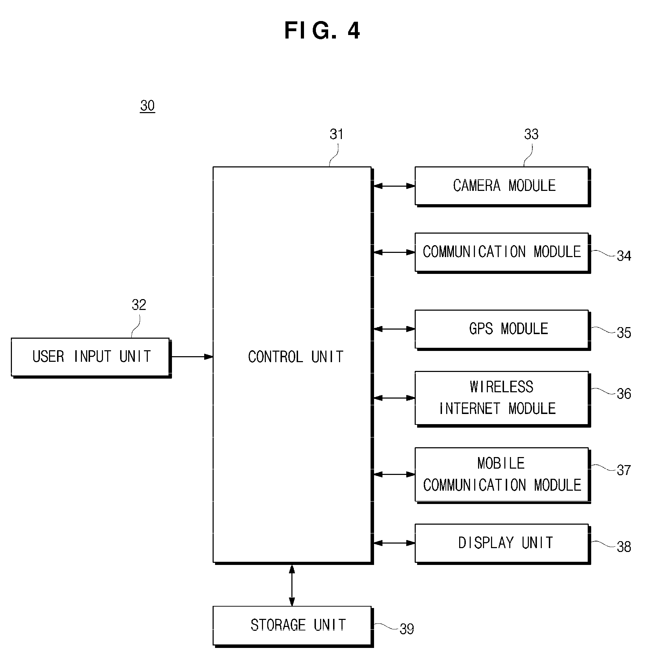

FIG. 4 is a control block diagram of the user terminal in the bicycle rental system according to the embodiment of the present invention.

Referring to FIG. 4, the user terminal 30 executes an app for rental of the public bicycle to perform a rental mode for rental of the public bicycle and a return mode for return of the public bicycle, and displays a screen for execution of the rental mode and the return mode.

The user terminal 30 may include a control unit 31, a user input unit 32, a camera module 33, a communication module 34, a GPS module 35, a wireless Internet module 36, a mobile communication module 37, a display unit 38, and a storage unit 39.

The user input unit 32 receives a command for operation control of the user terminal 30 by a user. The user input unit 32 may be a touch screen including the display unit 38.

The camera module 33 captures an image using a camera.

The wireless communication unit 34 to 37 may include the communication module 34, the GPS module 35, the wireless Internet module 36, and the mobile communication module 37.

The communication module 34 supports communication with the public bicycle 10. For example, Bluetooth, IrDA (Infrared Data Association), UWB (Ultra Wideband), ZigBee, NFC (Near Field Communication), and the like may be used as communication technologies.

The GPS module 35 receives position information of the user terminal using a plurality of GPS satellites.

The wireless Internet module 36 supports wireless Internet connection. For example, WLAN (Wireless LAN) Wi-Fi and the like may be used as wireless Internet technologies.

The mobile communication module 37 transmits and receives wireless signals through at least one of a mobile communication base station, an external terminal, and a server. Here, the wireless signals may include voice communication signals, image communication signals, or various types of data according to transmission and reception of text/multimedia messages. For example, 2G (2nd Generation), 3G (3rd Generation), LTE (Long Term Evolution), LTE-A (LTE Advanced), and the like may be used as mobile communication technologies. In addition, 3G (3rd Generation), LTE (Long Term Evolution), and LTE-A (LTE Advanced) may also be used as wireless Internet technologies.

The display unit 38 displays information processed by the user terminal 30.

The storage unit 39 may store temporary data generated during processing of the program of the control unit 31 and execution of the program for control. In addition, the storage unit 39 may store user information of the user terminal, information created during execution of an app for rental of the public bicycle (hereinafter, referred to as "rental app"), transmission/reception information with the public bicycle 10, transmission/reception information with the bicycle management server 40, and the like.

The control unit 31 generally controls the user input unit 32, the camera module 33, the communication module 34, the GPS module 35, the wireless Internet module 36, the mobile communication module 37, the display unit 38, and the storage unit 39. The control unit 31 performs operations such as communication with the public bicycle 10, wireless communication with the bicycle management server 40, imaging, captured image analysis, and the like.

In addition, the control unit 31 may execute the rental app and process operation required by the executed rental app.

Hereinafter, a description will be given of the rental and return of the public bicycle 10 based on a screen of the rental app executed by the control unit 31.

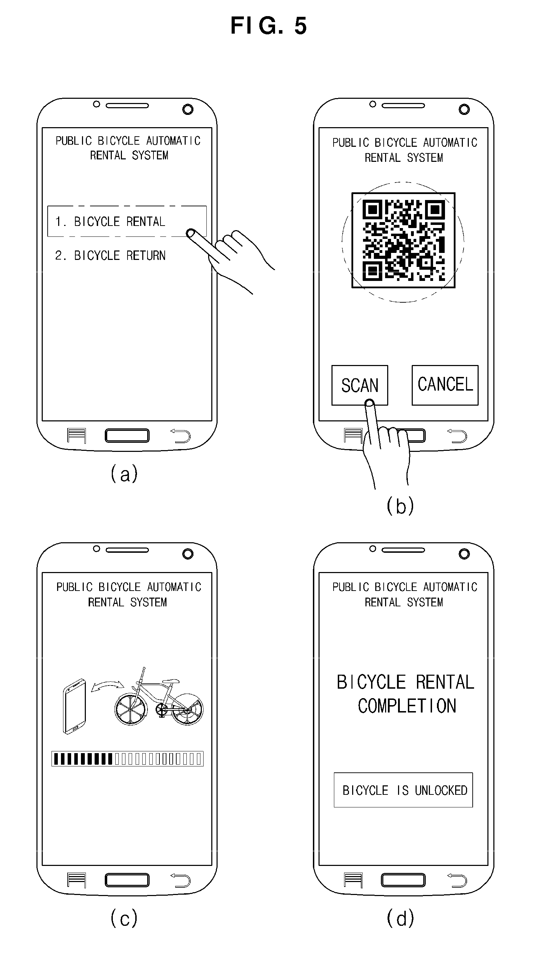

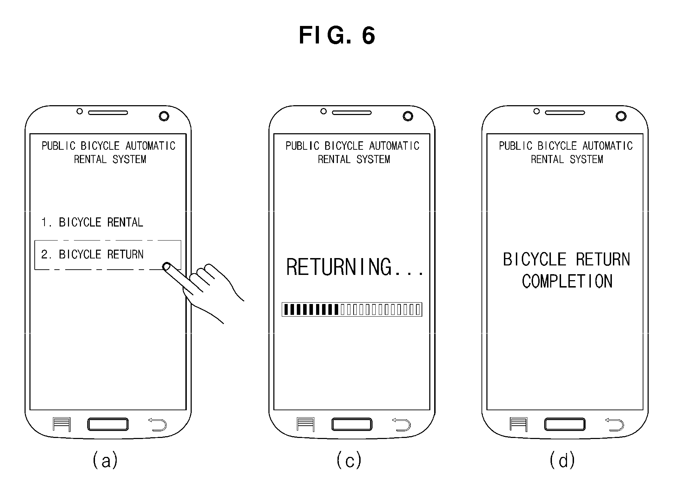

FIG. 5 is a view for explanation of a screen of the rental app through which the public bicycle is rented in the bicycle rental system according to the embodiment of the present invention. FIG. 6 is a view for explanation of a screen of a rental app through which the public bicycle is returned in the bicycle rental system according to the embodiment of the present invention. Hereinafter, for convenience of description, a description will be given in which identification information of the public bicycle 10 and information for pairing with the user terminal are stored in a QR code form.

When the rental app is selected on the display unit 38 of the user terminal 30, the rental app is executed. The rental app processes a series of required operations according to a mode selected by a user among a bicycle rental mode and a bicycle return mode.

First, when the rental is executed, the rental app displays an initial screen which may select the bicycle rental mode and the bicycle return mode (see FIG. 5 (a)).

When a user selects the bicycle rental mode on the initial screen, the rental app activates the camera module 33 and the GPS module 35 so as to be capable of scanning a QR code and then displays a screen to scan the QR code (see FIG. 5 (b)).

When a user selects a scan on the QR code scan screen, the rental app scans the QR code, analyses information of the scanned QR code to perform pairing for communication linkage between the public bicycle 10 on which the QR code is printed and the user terminal 30, and displays a screen indicative of the progress of pairing (see FIG. 5 (c)).

When the pairing is completed, the rental app recognizes identification information of the public bicycle 10 which is provided from the paired public bicycle 10 or acquired by the scan of the QR code, and position information of the user terminal 30 acquired by the GPS module 35. Then, the rental app requires the control unit 31 to transmit the identification information of the public bicycle 10, the position information of the user terminal 30, and the information of the user terminal to the bicycle management server 40 in order to rent the public cycle 10. When rental approval information is transmitted from the bicycle management server 40 to the user terminal 30 according to a rental approval request, the rental app displays a screen to output a message informing completion of the bicycle rental while transmitting the rental approval information to the pairing public bicycle 10 by the control unit 31 in order to unlock the bicycle locking device 12 of the pairing public bicycle 10 (see FIG. 5 (d)).

Meanwhile, when a user connects the rented public bicycle 10 to the docking portion 22 of the bicycle holder 20 and then selects the bicycle return mode on the initial screen of the rental app (see FIG. 6 (a)), the rental app requires the control unit 31 to transmit the identification information of the public bicycle 10, the position information of the user terminal 30, and the information of the user terminal to the bicycle management server 40 in order to return the public cycle 10. The rental app displays a screen indicative of "returning" until return is completed after a return request (see FIG. 6 (b)). When return confirmation information is transmitted from the bicycle management server 40 to the user terminal 30 in response to the return request, the rental app displays a screen to output a message informing completion of the bicycle return while releasing pairing with the pairing public bicycle 10 (see FIG. 6 (c)).

Referring to FIG. 1 again, the bicycle management server 40 communicates with the user terminal 30 via the network.

Membership information (being replaceable with user terminal information), rental and return information of the public bicycle for each member, position information of the returned public bicycle, position information of the station, and the like are stored in the database of the bicycle management server 40.

The bicycle management server 40 compares rental approval request information or return request information of the public bicycle 10 transmitted from the user terminal 30 with information stored in the database to creates rental approval information or return confirmation information, transmits the created rental approval information or return confirmation information to the user terminal 30, and stores the transmitted rental approval information or return confirmation information in the database to manage the same.

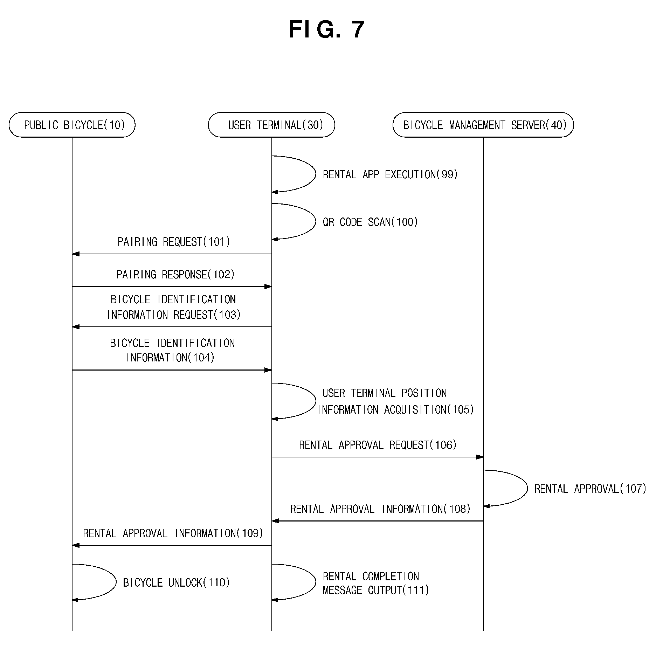

FIG. 7 is a control flowchart for explanation of a method of renting the public bicycle in the bicycle rental system according to the embodiment of the present invention.

Referring to FIG. 7, first, a user executes the rental app installed in the user terminal 30 for rental of the public bicycle 10 (operation 99).

Then, when a user selects the bicycle rental mode on the initial screen of the executed rental app and then performs a command to scan the QR code attached on the public bicycle 10 to be rented, the user terminal 30 scans the QR code attached on the public bicycle 10 to be rented using the camera (operation 100) and analyses the scanned QR code to transmit a pairing request to the public bicycle 10 (operation 101).

The public bicycle 10 receiving the pairing request transmits a pairing response in response to the pairing request to the user terminal 30 (operation 102). Accordingly, the user terminal 30 and the public bicycle 10 are paired and linked by wireless communication therebetween so that the user terminal 30 and the public bicycle 10 may exchange information with each other and be mutually controlled.

When the public bicycle 10 is connected to the user terminal 30 by pairing therebetween, the user terminal 30 requests the identification information of the public bicycle 10 to the paired the public bicycle 10 (operation 103). The paired the public bicycle 10 transmits the identification thereof to the user terminal 30 according to the request of the user terminal 30 (operation 104). In this case, when the identification information of the bicycle is on the QR code, the user terminal 30 may also obtain the identification information of the paired public bicycle 10 from the scan result of the QR code without the request for identification information to the paired public bicycle 10.

When the user terminal 30 acquires the identification information of the paired public bicycle 10, the position information of the user terminal 30 is acquired through the GPS module 35 (operation 105).

The user terminal 30 creates rental approval request information including the identification information of the paired public bicycle 10, the position information of the user terminal 30, the information of the user terminal 30 (for example, phone numbers, USIM information, serial numbers, etc.) to transmit the same to the bicycle management server 40 so as to request rental approval of the paired public bicycle 10 to the bicycle management server 40 (operation 106).

The bicycle management server 40 checks associated information in the database based on the received rental approval request information according to the rental approval request of the user terminal 30 and then, if capable of being rented, approves rental of the public bicycle 10 (operation 107).

When the rental of the public bicycle 10 is approved, the bicycle management server 40 transmits rental approval information to approve the rental of the public bicycle 10 to the user terminal 30 (operation 108).

When the user terminal 30 receives the rental approval information from the bicycle management server 40, the received rental approval information is transmitted to the pairing public bicycle 10.

When the public bicycle 10 receives the rental approval information, the bicycle locking device 12 is unlocked (operation 110). As a result, the public bicycle 10 is decoupled from the bicycle holder 20 and enters a rentable state.

When the received rental approval information is transmitted to the pairing public bicycle 10 such that the state of the paired public bicycle 10 is converted into a rentable state, the user terminal 30 outputs a rental completion message such that a user may identify completion of the bicycle rental (operation 111).

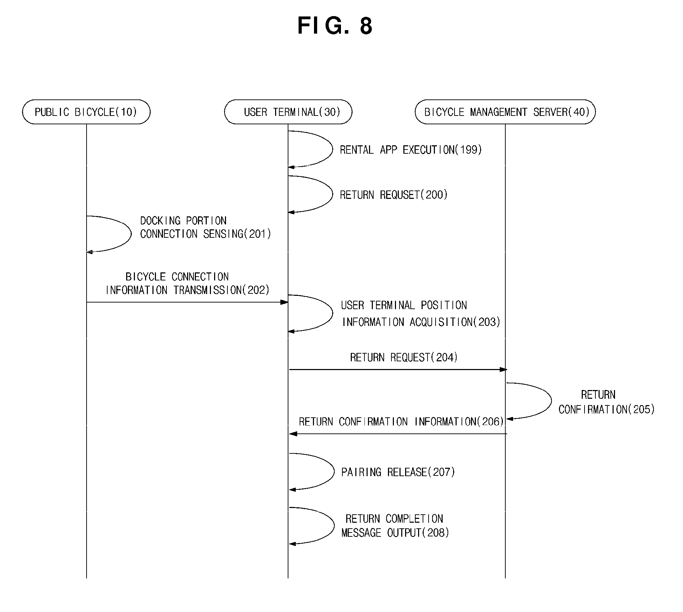

FIG. 8 is a control flowchart for explanation of a method of returning the public bicycle in the bicycle rental system according to the embodiment of the present invention.

Referring to FIG. 8, first, a user executes the rental app installed in the user terminal 30 in order to rent and then return the public bicycle 10 (operation 199).

Then, when a user selects the bicycle rental mode on the initial screen of the executed rental app in order to perform a return request (operation 200) and then connects the docking portion 22 of the bicycle holder 20 to the bicycle locking device 12 of the public bicycle 10 to be returned, the public bicycle 10 senses connection of the docking portion 22 through the docking sensing unit 17 (operation 201) and transmits bicycle connection information informing that the rented public bicycle 10 is connected to the bicycle holder 20 to the user terminal 30 paired when the bicycle is rented (operation 202).

The user terminal 30 paired with the public bicycle 10 receives the bicycle connection information and activates the GPS module 35 to acquire the position information of the user terminal 30 (operation 203).

Then, the user terminal 30 creates return request information including the identification information of the paired public bicycle 10, the position information of the user terminal 30, the information of the user terminal 30 (for example, phone numbers, USIM information, serial numbers, etc.) to transmit the same to the bicycle management server 40 so as to request return of the rented public bicycle 10 to the bicycle management server 40 (operation 204).

The bicycle management server 40 checks associated information in the database based on the received return request information according to the return request of the user terminal 30 so as to confirm return of the public bicycle 10 (operation 205).

When the return of the public bicycle 10 is confirmed, the bicycle management server 40 transmits return confirmation information informing that the return of the public bicycle 10 is confirmed to the user terminal 30 (operation 206).

When the user terminal 30 receives the return confirmation information, the user terminal 30 releases the pairing of the paired public bicycle 10 (operation 207) and outputs a return completion message indicative of return completion of the public bicycle 10 (operation 208).

As is apparent from the above description, since a bicycle linked to a user terminal by wireless communication therebetween is automatically rented and returned using the user terminal, management for rental and return of the bicycle may be easily performed without a need to input a separate bicycle identification number.

In addition, since a bicycle has a bicycle locking device and a wireless communication device instead of a bicycle holder, the number of components of the bicycle holder may be minimized. Therefore, it may be possible to significantly reduce costs required to install a bicycle rental system to a bicycle rental place.

Although a few embodiments of the present invention have been shown and described, it would be appreciated by those skilled in the art that changes may be made in these embodiments without departing from the principles of the invention, the scope of which is defined in the claims.

## Claims

1. A bicycle rental system comprising:
a public bicycle (10) having a bicycle locking function and a wireless communication function;
a bicycle holder (20) having a docking portion which is provided to be capable of being connected to the public bicycle (10) such that the public bicycle (10) is locked;
a bicycle management server (40) which manages rental and return of the public bicycle (10) and transmits rental approval information and return confirmation information to the outside; and
a user terminal (30) which is provided to be capable of performing wireless communicate with the public bicycle (10), is linked to the bicycle management server (40) via a network, is provided with identification information of the public bicycle (10) from the public bicycle (10), creates rental approval request information including the provided identification information during rental of the public bicycle (10) to transmit the rental approval request information to the bicycle management server (40), creates return request information including the provided identification information during return of the public bicycle (10) to transmit the return request information to the bicycle management server (40), and receives the rental approval information and the return confirmation information transmitted from the bicycle management server (40) in response to the rental approval request information and the return request information,
wherein the public bicycle (10) comprises:
a two-dimensional bar code provided to be capable of being exposed thereto;
a bicycle locking device (12) to lock and unlock the public bicycle (10);
a wireless communication module (13) to exchange information with the user terminal (30) through communication; and
an ECU (14) which is linked to the user terminal (30) by wireless communication therebetween according to the request of the user terminal (30), and controls the bicycle locking device (12) such that, when the rental approval information is received from the user terminal (30) linked by the wireless communication, the public bicycle (10) is unlocked, and
wherein the user terminal (30) comprises a camera module (33) which captures the two-dimensional bar code provided to be capable of being exposed to the public bicycle (10), and the user terminal (30) scans the two-dimensional bar code using the camera module (33) and is automatically linked to the public bicycle (10) by wireless communication therebetween through the wireless communication module (13) based on the scanned result.

2. The bicycle rental system according to claim 1, wherein the user terminal (30) and the public bicycle (10) are linked by Bluetooth pairing therebetween based on the scanned result of the two-dimensional bar code.

3. The bicycle rental system according to claim 1 or 2, wherein the public bicycle (10) comprises a docking sensing unit (17) to sense connection of the docking portion to the bicycle locking device (12).

4. The bicycle rental system according to claim 3, wherein when the connection of the docking portion to the bicycle locking device (13) is sensed by the docking sensing unit (17), the public bicycle (10) transmits bicycle connection information indicating that the docking portion is connected to the bicycle locking device to the user terminal which is linked to the public bicycle by wireless communication therebetween.

5. The bicycle rental system according to any one of claims 1 to 4, wherein each of the rental approval request information and the return request information comprises identification information of the public bicycle (10), position information of the user terminal (30), and terminal information of the user terminal (30).

6. A bicycle rental method comprising:
renting a public bicycle (10) having a bicycle locking device (12) connected with a docking of a bicycle holder such that the bicycle is locked, and a wireless communication module (13) using a user terminal (30); and
returning the rented public bicycle (10) using the user terminal (30),
wherein the renting the public bicycle (10) comprises:
in the user terminal (30), activating an app for the rental of the public bicycle (10) installed in the user terminal (30), scanning a two-dimensional bar code provided to be exposed to the public bicycle using the app to link the public bicycle to the user terminal (30) by wireless communication therebetween, acquiring identification information of the public bicycle by a request to the public bicycle, creating rental approval request information including the acquired identification information of the public bicycle (10) to transmit the rental approval request information to a bicycle management server (40), receiving rental approval information transmitted from the bicycle management server in response to the rental approval request information, and transmitting the received rental approval information to the public bicycle (10); and
in the public bicycle, unlocking the bicycle locking device (12) such that, based on the rental approval information transmitted from the user terminal, the docking portion is decoupled from the bicycle locking device (12) and the public bicycle (10) is decoupled from the bicycle holder (20).

7. The bicycle rental method according to claim 6, wherein the returning the public bicycle (10) comprises, when connection of the docking portion to the bicycle locking device (12) is sensed by a docking sensing unit (17) to sense the connection of the docking portion to the bicycle locking device (12), transmitting bicycle connection information indicating that the docking portion is connected to the bicycle locking device (12) to the user terminal (30) which is linked to the public bicycle (10) by wireless communication therebetween.
